# EUROPEAN PATENT APPLICATION

(11) **EP 3 907 666 A2**
(43) Date of publication of application: **10.11.2021**
(21) Application number: 21162981.1
(22) Date of filing: 16.03.2021
(51) Int. Cl.: G06N 3/04, G06N 3/08

(54) **METHOD, APPARATUS, ELECTRONIC DEVICE, READABLE STORAGE MEDIUM AND PROGRAM FOR CONSTRUCTING KEY-POINT LEARNING MODEL**

(30) Priority: 15.07.2020 CN 202010681773
(71) Applicant: BEIJING BAIDU NETCOM SCIENCE AND TECHNOLOGY CO. LTD., 100085 Beijing (CN)
(72) Inventor: MENG, Qingyue, Haidian District, Beijing 100085 (CN); ZHAO, Chen, Haidian District, Beijing 100085 (CN)
(74) Representative: Mewburn Ellis LLP

(57) **Abstract**

The present disclosure provides a method, an apparatus, an electronic device, and a computer readable storage medium for constructing a key-point learning model, and relates to the technical fields of image processing, image labeling, artificial intelligence and machine learning. A specific embodiment of the method includes: acquiring labeled data labeling a human-body key-point and unlabeled data that does not label the human-body key-point; training, using the labeled data, an initial prediction model and an initial discriminator in a supervised training way to obtain a first prediction model and a first discriminator; training, using the unlabeled data, the first prediction model and the first discriminator in an unsupervised training way to obtain a second prediction model and a second discriminator; and constructing a key-point learning model according to the second prediction model and the second discriminator. This embodiment makes full use of a large amount of unlabeled data, and reduces the threshold and difficulty of constructing a key-point learning model.

## Description

### TECHNICAL FIELD

The present disclosure relates to the technical field of data processing, specifically to the technical fields of image processing, image labeling, artificial intelligence and machine learning, and more specifically to a method, an apparatus, an electronic device, and a computer readable storage medium for constructing a key-point learning model.

### BACKGROUND

With the development of Internet technology and popularization of human-machine interaction application, the application value of obtaining accurate and reasonable human-body key-points is getting higher and higher. For example, the technology has been applied in some fields, such as somatosensory games, human behavior analysis and virtual image driving, and there is a good application progress even in current children education and live broadcast special effects, etc.

Accurate human-body key-points are the key to achieving excellent effects in above application scenarios. The existing technology provides an idea for constructing a key-point learning model by using a machine learning algorithm and a deep learning algorithm, which require a large amount of accurate labeled data of a human-body key-point to participate in training during the construction process.

### SUMMARY

Embodiments of the present disclosure provide a method, an apparatus, an electronic device, and a computer readable storage medium for constructing a key-point learning model.

In a first aspect, an embodiment of the present disclosure provides a method for constructing a key-point learning model, the method including: acquiring labeled data labeling a human-body key-point and unlabeled data that does not label the human-body key-point; training, using the labelled data, an initial prediction model and an initial discriminator in a supervised training way to obtain a first prediction model and a first discriminator; training, using the unlabeled data, the first prediction model and the first discriminator in an unsupervised training way to obtain a second prediction model and a second discriminator; and constructing a key-point learning model according to the second prediction model and the second discriminator.

In a second aspect, an embodiment of the present disclosure provides an apparatus for constructing a key-point learning model, the apparatus including: a labeled and unlabeled data acquisition unit, configured to acquire labeled data labeling a human key-point and unlabeled data that does not label the human key-point; a supervised training unit, configured to train, using the labeled data, an initial prediction model and an initial discriminator in a supervised training way to obtain a first prediction model and a first discriminator; an unsupervised training unit, configured to train, using the unlabeled data, the first prediction model and the first discriminator in an unsupervised training way to obtain a second prediction model and a second discriminator; and a key-point learning model construction unit, configured to construct a key-point learning model according to the second prediction model and the second discriminator.

In a third aspect, an embodiment of the present disclosure provides an electronic device, including: at least one processor; and a memory in communication with the at least one processor, where the memory stores instructions executable by the at least one processor, and the instructions, when executed by the at least one processor, cause the at least one processor to implement the method for constructing the key-point learning model as described in any one of the implementations of the first aspect.

In a fourth aspect, an embodiment of the present disclosure provides a non-transitory computer readable storage medium storing computer instructions, and the computer instructions, when executed by a computer, cause the computer to implement the method for constructing the key-point learning model as describes in any one of the implementations of the first aspect.

In a fifth aspect, an embodiment of the present disclosure provides a computer program, and the computer program, when executed by a computer, causes the computer to perform the method as described in any of the implementations of the first aspect.

According to the method, the apparatus, the electronic device, and the computer readable storage medium for constructing the key-point learning model provided by the embodiments of the present disclosure, labeled data labeling a human-body key-point and unlabeled data that does not label the human-body key-point are first acquired; the labeled data is used to train an initial prediction model and an initial discriminator in a supervised training way to obtain a first prediction model and a first discriminator; and then, the unlabeled data is used to train the first prediction model and the first discriminator in an unsupervised training way to obtain a second prediction model and a second discriminator; and finally, a key-point learning model is constructed according to the second prediction model and the second discriminator.

Different from the existing technology that requires a large amount of labeled data to construct a key-point learning model, the present disclosure provides a new solution for constructing the key-point learning model in a semi-supervised way. A generative adversarial training is first executed by using a small amount of the labeled data in a supervised way, and then combined with the preliminary result of the generative adversarial training, the unlabeled data is used to execute a further training. This solution makes full use of a large amount of the unlabeled data. Due to the addition of the generative adversarial thought, the accuracy of the final constructed model is also relatively high, and the threshold and difficulty of constructing the key-point learning model are reduced.

It should be appreciated that the content described in this part is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

After reading detailed descriptions of nonlimiting embodiments with reference to the following accompanying drawings, other features, objectives and advantages of the present disclosure will be more apparent.
Fig. 1 is an example system architecture diagram in which the present disclosure may be applied;
Fig. 2 is a flowchart of a method for constructing a key-point learning model provided by an embodiment of the present disclosure;
Fig. 3 is another flowchart of the method for constructing the key-point learning model provided by an embodiment of the present disclosure;
Fig. 4 is a structural block diagram of an apparatus for constructing the key-point learning model provided by an embodiment of the present disclosure; and
Fig. 5 is a schematic structural diagram of an electronic device adapted to execute the method for constructing the key-point learning model provided by an embodiment of the present disclosure.

### DETAILED DESCRIPTION OF EMBODIMENTS

The present disclosure will be described below in detail with reference to the accompanying drawings and in combination with the embodiments. It should be appreciated that the specific embodiments described herein are merely used for explaining the present disclosure, rather than limiting the present disclosure. In addition, it should be noted that, for the ease of description, only the parts related to the present disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

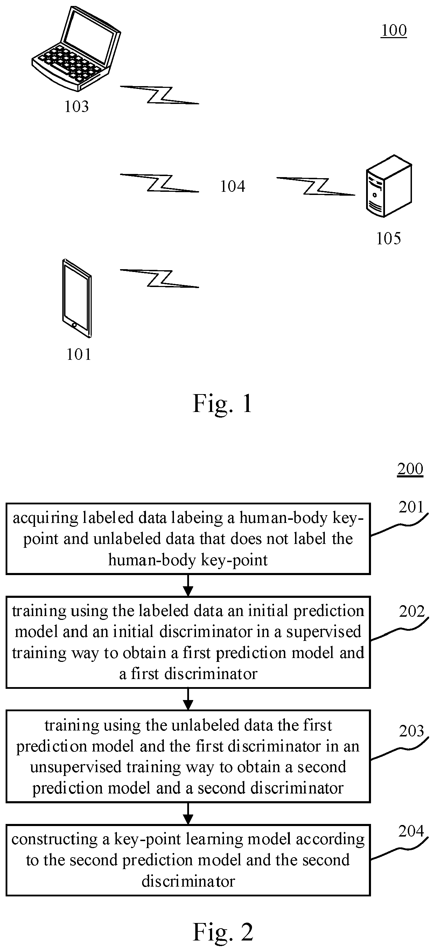

Fig. 1 shows an example system architecture 100 of an embodiment in which a method, an apparatus, an electronic device, and a computer readable storage medium for constructing a key-point learning model of the present disclosure may be applied.

As shown in Fig. 1, the system architecture 100 may include terminal devices 101, 102 and 103, a network 104, and a server 105. The network 104 serves as a medium providing a communication link between the terminal devices 101, 102 and 103 and the server 105. The networks 104 may include various types of connections, such as wired or wireless communication links, or optical fiber cables.

A user may use the terminal devices 101, 102 and 103 to interact with the server 105 through the network 104 to receive or send messages. Various applications for implementing communication between the terminal and the server, such as a data transmission application, a key-point learning application and an instant messaging application may be installed on the terminal devices 101, 102 and 103 and the server 105.

The terminal devices 101, 102 and 103 and the server 105 may be hardware or software. When the terminal devices 101, 102, 103 are hardware, the hardware may be various electronic devices having a display screen and a camera, including but not limited to, a smart phone, a tablet computer, a laptop portable computer and a desktop computer. When the terminal devices 101, 102, 103 are software, the software may be installed in the electronic device. The software may be implemented as multiple software pieces or software modules, or as a single software piece or software module, which are not specifically limited herein. When the server 105 is hardware, the hardware may be implemented as a distributed server cluster composed of multiple servers, or as a single server. When the server 105 is software, the software may be implemented as multiple software pieces or software modules, or as a single software piece or software module, which are not specifically limited herein.

The server 105 may provide various services through various built-in applications. Taking a key-point learning application that can provide a human-body key-point learning model construction service as an example, the server 105, when runs the key-point learning application, may achieve the following effects: first, the labeled data labeling a human-body key-point, and the unlabeled data that does not label the human-body key-point are acquired through the network 104 from the terminal devices 101, 102 and 103; then, the labeled data is used to train an initial prediction model and an initial discriminator in a supervised training way to obtain a first prediction model and a first discriminator; after that, the unlabeled data is used to train the first prediction model and the first discriminator in an unsupervised training way to obtain a second prediction model and a second discriminator; and finally, a key-point learning model is constructed based on the second prediction model and the second discriminator. Through these processing steps, the server 105 may achieve the purpose of constructing the key-point learning model based on a small amount of the labeled data and a large amount of unlabeled data.

It should be noted that the labeled data labeling the human-body key-point and the unlabeled data that does not label the human-body key-point may be acquired in real time from the terminal devices 101, 102 and 103 through the network 104, and may alternatively be pre-stored locally at the server 105 in various ways. When the server 105 detects that the data has been stored locally (for example, a key point learning model construction task stored before the start of processing), the server 105 may choose to acquire the data directly from the local. In this case, the example system architecture 100 may alternatively not include the terminal devices 101, 102 and 103 and the network 104.

Since the construction of the key-point learning model requires a large amount of operations based on the labeled data and the unlabeled data, which occupies lots of computational resources and needs a strong computational capability, and the method for constructing the key-point learning model provided in the subsequent embodiments of the present disclosure is generally executed by the server 105 having lots of computational resources and a strong computational capability, and accordingly, the apparatus for constructing the key-point learning model is also generally arranged in the server 105. However, it should also be noted that, when the terminal devices 101, 102 and 103 also have the computational resources and the computational capability that meet requirements, the terminal devices 101, 102, and 103 may complete all or a part of the above computations performed by the server 105 through the key-point learning application installed on the terminal devices 101, 102 and 103, thereby constructing the key-point learning model alone or in cooperation with the server 105, particularly in the case where multiple terminal devices have different computational capabilities.

When the key-point learning application determines that the terminal device on which the key-point learning application is located has a strong computational capability and a large amount of remaining computational resources, the terminal device may be allowed to execute the above computations, so that the computation pressure of the server 105 is appropriately reduced. Correspondingly, the apparatus for constructing the key-point learning model may alternatively be provided in the terminal devices 101, 102 and 103. In this case, the example system architecture 100 may alternatively not include the server 105 and the network 104.

It should be appreciated that the number of the terminal devices, the network and the server in Fig. 1 is merely illustrative. Any number of terminal devices, networks, and servers may be provided based on actual requirements.

Further referring to Fig. 2, Fig. 2 is a flowchart of a method for constructing a key-point learning model provided by an embodiment of the present disclosure, and the flow 200 includes the following steps 201 to 204.

Step 201 includes acquiring labeled data labeling human key-point and unlabeled data that does not label the human key-point.

This step is intended to acquire the labeled data labeling the human-body key-point and the unlabeled data that does not the label the human-body key-point, by the execution body of the method for constructing the key-point learning model (such as the server 105 shown in Fig. 1).

The labeled data labeling the human-body key-point may be directly acquired by the full-body motion capture device, or may be labeled by a professional key-point labeling person according to certain requirements and rules. The unlabeled data including a human-body image may be directly photographed by various electronic devices having a photographing function. Further, the unlabeled data may be captured or extracted from a human-motion video including the human-body image.

Step 202 includes training, using the labeled data, an initial prediction model and an initial discriminator in a supervised training way to obtain a first prediction model and a first discriminator.

On the basis of the step 201, this step is intended to train, by the execution body using the labeled data, the initial prediction model and the initial discriminator in the supervised training way based on the generative adversarial thought, thereby completing the first modification of the prediction model according to the labeled actual human-body key-point value in the labeled data, the predicted human-body key-point value and the prediction accuracy of the labeled data, and completing the first modification of the discriminator according to the discrimination accuracy of discriminating whether the key-point value is an actual value (also called a true value).

The purpose of the supervised training based on the labeled data in this step is to make the prediction model learn which location point of the labeled data belongs to the key-point, and the discriminator is introduced based on the generative adversarial thought, and is intended to indirectly help the prediction model to modify the parameters by discriminating whether the key-point output by the prediction model may be determined as the actual value, so that the prediction model has better prediction accuracy of the key-point.

Step 203 includes training, using the unlabeled data, the first prediction model and the first discriminator in an unsupervised training way to obtain a second prediction model and a second discriminator.

On the basis of the step 202, this step is intended to train, by the execution body using the unlabeled data, the first prediction model and the first discriminator in an unsupervised training way based on the generative adversarial thought, thereby completing the second modification of the prediction model and the discriminator in combination with a large amount of the unlabeled data to be applied subsequently, so that the prediction model and the discriminator with the second modification are more suitable for the unlabeled data, thereby removing as much as possible the erroneous guidance of the labeled data to the prediction model due to the labeling way adopted by the labeled data.

Specifically, the prediction model for obtaining the key-point of the human body based on the prediction of the human-body image may specifically select multiple machine learning and deep learning algorithms or networks, such as a residual network having a good ability to prevent the gradient from disappearing, a long short-term memory network having a good ability to memorize data which is important but has a small number of occurrences, and some conventional convolution neural networks. Further, in the case where the general framework of the algorithm or the network is determined, various parameters including a number of functional layers, a connection way, a loss function, an activation function and a number of key points may be set on the basis of the framework of the algorithm or the network, in order to improve the key-point prediction accuracy of the prediction model through a reasonable combination.

The functional layers include a convolution layer, a pooling layer, a full connected layer and a normalization layer (a softmax layer) and the like, and the connection ways include sequential connections and parallel connections, and the loss function includes any one of the L1 loss function (also known as the minimum absolute value deviation, which minimizes the sum of the absolute differences between the target values and the estimated values), the L2 loss function (also known as the norm loss function, which essentially obtains a minimum square error, that is, minimizes the sum of the squares of the difference between the target value and the estimated value), the cross entropy loss function, the 0 to 1 loss function and the exponential loss function, and any combination thereof, which are not specifically limited herein, and may be flexibly selected according to the characteristics of an actual application scenario.

In the actual training process, the supervised training process as described in the step 202 and the unsupervised training process as described in the step 203 are repeated continuously until the prediction model reaches satisfactory accuracy, before the next step of constructing the key-point learning model is executed.

Step 204 includes constructing a key-point learning model according to the second prediction model and the second discriminator.

On the basis of the step 203, this step is intended to construct the key-point learning model by the execution body according to the second prediction model and the second discriminator obtained through the two modifications.

Further, alternatively the supervised training and/or unsupervised training process may be performed on the constructed key-point learning model according to the subsequently acquired new sample data, so that the parameters of the key-point learning model may be updated in time, thereby maintaining the prediction accuracy of the key-point by the model.

Different from the existing technology that requires a large amount of labeled data to construct a key-point learning model, the method for constructing the key-point learning model provided by the embodiment of the present disclosure provides a new solution for constructing the key-point learning model in a semi-supervised way. A generative adversarial training is first executed by using a small amount of the labeled data in a supervised way, and then combined with the preliminary result of the generative adversarial training, the unlabeled data is further used for training. This solution makes full use of a large amount of the unlabeled data. Due to the addition of the generative adversarial thought, the accuracy of the final constructed model is also relatively high, and the threshold and difficulty of constructing the key-point learning model are reduced.

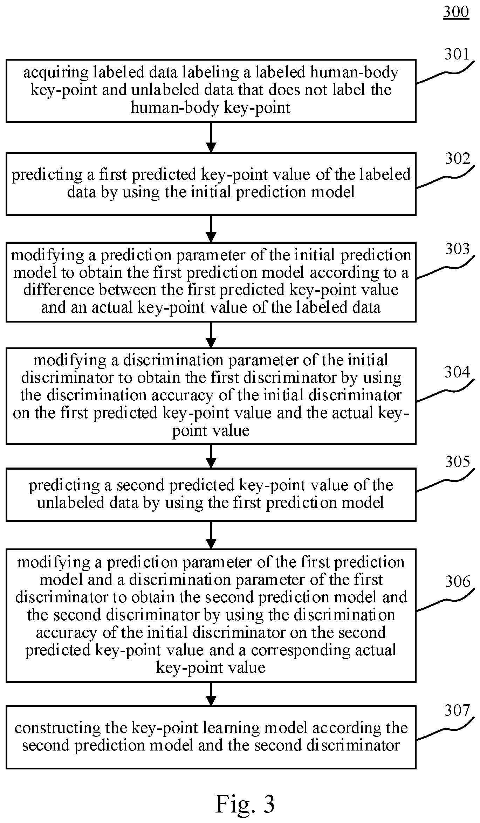

Further referring to Fig. 3, Fig. 3 is another flowchart of the method for constructing the key-point learning model provided by an embodiment of the present disclosure. The flow 300 includes the following steps 301 to 307.

Step 301 includes acquiring labeled data labeling a human-body key-point and unlabeled data that does not label the human-body key-point.

This step is consistent with the step 201 shown in Fig. 2. The same content of this step refer to the corresponding part of the previous embodiment, and details are not described herein.

Step 302 includes predicting a first predicted key-point value of the labeled data by using the initial prediction model.

This step is intended to input the labeled data into the initial prediction model by the execution body to obtain the first predicted key-point value through using the initial prediction ability for the key-point by the initial prediction model.

Step 303 includes modifying a prediction parameter of the initial prediction model to obtain the first prediction model according to a difference between the first predicted key-point value and an actual key-point value of the labeled data.

On the basis of the step 302, this step is intended to obtain the difference between the first predicted key-point value of the labeled data and the actual key-point value of the labeled data, and to modify the prediction parameter of the initial prediction model for predicting the key-point according to the difference, so that the first prediction model, of which the predicted value for the labeled data is closer to the actual value, may be obtained.

Step 304 includes modifying a discrimination parameter of the initial discriminator to obtain the first discriminator through using accuracy of discrimination between the first predicted key-point value and the actual key-point value by the discriminator.

On the basis of the step 303, this step is intended to modify, by the execution body, the discrimination parameter of the initial discriminator based on the discrimination accuracy of the initial discriminator on the first predicted key-point value and the actual key-point value, to obtain the first discriminator.

The function of the discriminator in the present disclosure is to discriminate whether the key-point value output by the prediction model is an actual value (i.e., a true value), that is, when the predicted key-point value output by the prediction model is accurate enough, the discriminator may be "deceived" to mistake the "predicted value" for the "actual value". Therefore, as the important embodiment of the generative adversarial thought, the discriminator plays an important role in the present disclosure to strictly control whether the parameter modification of the prediction model is adequate.

In practice, in the supervised training process based on the labeled data, the prediction model and the discriminator are subjected to multiple iterations so as to finally satisfy the iteration quitting condition preset for the discriminator. The iteration quitting condition may be generally a discrimination accuracy rate in the present disclosure, for example, the condition that the discriminator determines that 95% of the predicted values output by the prediction model are all actual values is satisfied.

Step 305 includes predicting a second predicted key-point value of the unlabeled data by using the first prediction model.

On the basis of the step 304, this step is intended to input by the execution body the unlabeled data into the first prediction model obtained through the first modification to obtain the second predicted key-point value output by the first prediction model.

Step 306 includes modifying a prediction parameter of the first prediction model and a discrimination parameter of the first discriminator to obtain the second prediction model and the second discriminator by using the discrimination accuracy of the first discriminator on the second predicted key-point value and a corresponding actual key-point value.

On the basis of the step 305, this step is intended to modify the prediction parameter of the first prediction model and the discrimination parameter of the first discriminator by the execution body to obtain the second prediction model and the second discriminator by using the discrimination accuracy of the first discriminator on the second predicted key-point value and the corresponding actual key-point value.

Different from the first modification of the step 304 and the step 305, this step directly uses the discrimination accuracy of the modified first discriminator on the second predicted key-point value and the corresponding actual key-point value to simultaneously modify the prediction parameter of the first prediction model and the discrimination parameter of the first discriminator.

Step 307 includes constructing the key-point learning model according to the second prediction model and the second discriminator.

This embodiment provides a specific supervised training solution through the steps 302 to 304, in which the prediction model and the discriminator are modified in sequence. A specific unsupervised training solution is provided through the steps 305 to 306, in which the predicted key-point value of the unlabeled data is predicted using the first prediction model. Since the above solutions are all the sub-solutions of each step of the previous embodiment, this embodiment also has all the beneficial effects of the previous embodiment.

On the basis of any of the above embodiments, after the key-point learning model is constructed, the key-point learning model may be used in multiple scenarios to achieve the corresponding effects. For example, the constructed key-point learning model may be directly used to predict the key-point of new unlabeled data, that is, the unlabeled data may be quickly converted into the labeled data.

In addition, the human-body pose data may be obtained by labeling the human-body pose based on the human-body key-point of the labeled data output by the key-point learning model. The human-body pose data combined with the key-point may also be synchronized to the corresponding human-body key-point of the virtual character created by the same user in the virtual scenario, so that the human-body pose of parts of the virtual character is highly consistent with the actual user, and the user may execute various operations on the virtual object in the virtual scenario.

For deepening the understanding, the present disclosure further provides a specific implementation for the actual requirement of a specific application scenario. The actual requirement is that a key-point learning model is constructed by using labeled data (20%) labeling the human-body key-point and unlabeled data (80%), and finally the human-body key-point output by the key-point learning model is used to support the pose labeling, thereby corresponding to a VR (virtual reality) operation.

For achieving this purpose, this embodiment will be accomplished in the following parts:
1) determining the basic structure of the model;
2) semi-supervised training, i.e., constructing the model;
3) labeling and synchronizing the pose.

### 1) Determining the basic structure of the model

Determining the model structure: the key-point learning model is composed of a key-point prediction model and a discriminator. In this embodiment, the residual network is selected as the basic framework of the prediction model, and the initial discriminator is constructed by using three fully connected layers connected in sequence, a normalization layer and a binary classifier, to improve the discrimination accuracy as much as possible.

The input of the residual network is pre-processed image data and the output of the residual network is the coordinate value of N key-points, where N may be adjusted as needed. The input of discriminator is the coordinate value of N key-points, and the output of the discriminator is the discrimination result about whether the coordinate value of the key-points belongs to an actual value (i.e., a true value).

Determining the loss function: this embodiment selects the L2 loss function as the loss function of the residual network to predict the human-body key-point, and uses the cross entropy loss function as the loss function of the discriminator for the binary classification.

### 2) semi-supervised training.

The labeled data and a large amount of the unlabeled data required for the training are prepared.

The supervised training process:
the pre-processed labeled data is input into the residual network and the coordinate value O_{c} of the predicted key-point is output. The loss value of the coordinate value is calculated according to the output coordinate value and the actual coordinate value: Loss_{c} =□O_{c} - G_{c}□₂, and the Loss_{c} is sent back to the residual network for the parameter modification;
in the step of classifying the human-body key-point, this embodiment labels the category of the actual coordinate value ***G_{c}*** as 1, labels the category of the predicted coordinate value ***O_{c}*** as 0, and expects the discriminator to correctly classify the actual value and the predicted value. During the training, the input of the discriminator is a group of coordinate values and the output of the discriminator is the category of the group of coordinate value, and the classification loss value is calculated according to the output catetory O_{cls} and the labeled category G_{cls}: Loss_{cls} = BCE (O_{cls}, G_{cls}), where the BCE () is a binary cross entropy loss function, and the Loss_{cls} is sent back to the discriminator for the parameter modification;
when the accuracy of the discriminator reaches 95% or more, the training may be ended.

The unsupervised training process:
the pre-processed unlabeled data is input into the residual network that has been modified once and the coordinate value O_{c} of the predicted key-point is output, and the O_{c} is input into the modified discriminator to obtain the discrimination value of the coordinate value, and the loss value between the discrimination value of the predicted key-point and the classification 1 is calculated: Loss_{cls} = BCE (O_{cls}, G_{cls}), and the Loss_{cls} is sent back to the residual network again for the parameter modification. The supervised training process is repeated until the discrimination accuracy of the discriminator reaches a certain set value;
that is, the two steps of the supervised training and the unsupervised training are repeated continuously during the entire training until the residual network reaches the satisfactory accuracy, and the key-point learning model is then constructed based on the modified residual network and modified the discriminator.

### 3) labeling and synchronizing the pose.

The human-body key-point output by the key-point learning model is labeled with the pose, and is synchronized to the corresponding key-point of the virtual character created by the corresponding user in a virtual application scenario, thereby realizing the synchronization of the pose.

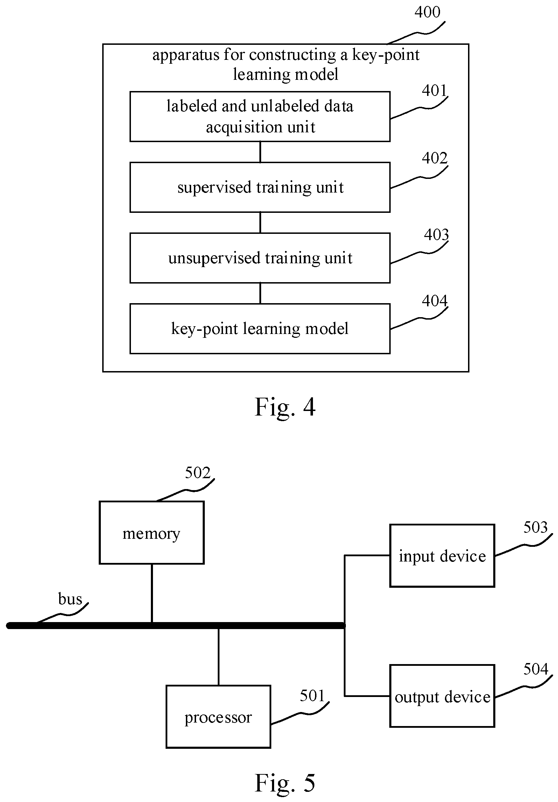

Further referring to Fig. 4, as an implementation of the method shown in each of the above figures, the present disclosure provides an embodiment of an apparatus for constructing the key-point learning model, which corresponds to the embodiment of the method shown in Fig. 2. The apparatus may specifically be applied in various electronic devices.

As shown in Fig. 4, the apparatus 400 for constructing the key-point model of this embodiment may include: a labeled and unlabeled data acquisition unit 401, a supervised training unit 402, an unsupervised training unit 403 and a key-point learning model construction unit 404. The labeled and unlabeled data acquisition unit 401 is configured to acquire labeled data labeling a human-body key-point and unlabeled data that does not label the human-body key-point; the supervised training unit 402 is configured to train using the labeled data an initial prediction model and an initial discriminator in a supervised training way to obtain a first prediction model and a first discriminator; the unsupervised training unit 403 is configured to train using the unlabeled data the first prediction model and the first discriminator in an unsupervised training way to obtain a second prediction model and a second discriminator; and the key-point learning model construction unit 404 is configured to construct a key-point learning model according to the second prediction model and the second discriminator.

In the apparatus 400 for constructing the key-point learning model of this embodiment, the specific processing of the labeled and unlabeled data acquisition unit 401, the supervised training unit 402, the unsupervised training unit 403 and the key-point learning model construction unit 404 and the technical effects thereof may be referred to the description of the steps 201 to 204 of the corresponding embodiment in Fig. 2, and detail are not described herein.

In some alternative implementations of this embodiment, the supervised training unit 402 is further configured to: predict a first predicted key-point value of the labeled data by using the initial prediction model; modify a prediction parameter of the initial prediction model to obtain the first prediction model according to a difference between the first predicted key-point value and an actual key-point value of the labeled data; and modify a discrimination parameter of the initial discriminator to obtain the first discriminator by using the discrimination accuracy of the initial discriminator on the first predicted key-point value and the first actual key-point value.

In some alternative implementations of this embodiment, the unsupervised training unit 403 is further configured to: predict a second predicted key-point value of the unlabeled data by using the first prediction model; and modify a prediction parameter of the first prediction model and a discrimination parameter of the first discriminator to obtain the second prediction model and the second discriminator by using the discrimination accuracy of the first discriminator on the second predicted key-point value and a corresponding actual key-point value.

In some alternative implementations of this embodiment, the initial discriminator is constructed based on three fully connected layers connected in sequence, a normalization layer and a binary classifier.

In some alternative implementations of this embodiment, the apparatus 400 for constructing the key-point learning model may further include: a key-point learning model prediction unit, configured to predict a key-point of new unlabeled data by using the key-point learning model.

In some alternative implementations of this embodiment, the apparatus 400 for constructing the key-point learning model may further include: a pose labeling unit, configured to label a pose for a human-body key-point output by the key-point learning model to obtain human-body pose data.

In some alternative implementations of this embodiment, the apparatus 400 for constructing the key-point learning model may further include: a virtual scenario synchronizing unit, configured to synchronize the human-body pose data to a corresponding human-body key-point of a virtual character created by a user in a virtual scenario.

This embodiment is the apparatus embodiment of corresponding to the method embodiment. Different from the existing technology that requires a large amount of labeled data to construct a key-point learning model, the apparatus for constructing the key-point learning model provided by this embodiment provides a new solution for constructing the key-point learning model in a semi-supervised way. A generative adversarial training is first executed by using a small amount of the labeled data in a supervised way, and then combined with the preliminary result of the generative adversarial training, the unlabeled data is further used for training. This solution makes full use of a large amount of the unlabeled data. Due to the addition of the generative adversarial thought, the accuracy of the final constructed model is also relatively high, and the threshold and difficulty of constructing the key-point learning model are reduced.

According to an embodiment of the present disclosure, the present disclosure further provides an electronic device and a computer readable storage medium.

Fig. 5 shows a block diagram of an electronic device adapted to execute the method for constructing the key-point learning model of an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 5, the electronic device includes one or more processors 501, a memory 502, and interfaces for connecting components, including a high-speed interface and a low-speed interface. The components are interconnected by using different buses and may be mounted on a common motherboard or otherwise as desired. The processor may process instructions executed within the electronic device, including instructions stored in memory or on memory to display graphical information of the GUI on an external input/output device (such as a display device coupled to an interface). In other embodiments, multiple processors and/or multiple buses and multiple memories may be used with multiple memories, if required. Similarly, multiple electronic devices may be connected, each of which provides some of the necessary operations (for example, used as a server array, a set of blade servers or a multiprocessor system). An example of a processor 501 is shown in Fig. 5.

The memory 502 is a non-transitory computer readable storage medium provided by the present disclosure. The memory stores instructions executed by at least one processor to cause the at least one processor to execute the method for constructing the key-point learning model provided by the present disclosure. The non-transitory computer readable storage medium of the present disclosure stores computer instructions for causing a computer to execute the method for constructing the key-point learning model provided by the present disclosure.

As a non-transitory computer readable storage medium, the memory 502 may be used to store non-transitory software programs, non-transitory computer executable programs and modules, such as the program instructions or modules corresponding to the method for constructing the key-point learning model in the embodiment of the present disclosure (such as the labeled and unlabeled data acquisition unit 401, the supervised training unit 402, the unsupervised training unit 403 and the key-point learning model construction unit 404 shown in Fig. 4). The processor 501 runs the non-transitory software programs, instructions and modules stored in the memory 502 to execute various functional applications and data processing of the server, thereby implementing the method for constructing the key-point learning model in the above embodiments of the method.

The memory 502 may include a storage program area and a storage data area, where the storage program area may store an operating system and an application program required by at least one function; and the storage data area may store data created by the use of the electronic device according to the method for constructing the key-point learning model and the like. In addition, the memory 502 may include a high-speed random access memory, and may further include a non-transitory memory, such as at least one magnetic disk storage device, a flash memory or other non-transitory solid state storage devices. In some embodiments, the memory 502 may alternatively include a memory disposed remotely relative to the processor 501, which may be connected through a network to the electronic device of the method for constructing the key-point learning model. Examples of such networks include, but are not limited to, the Internet, enterprise intranets, local area networks, mobile communication networks and the combinations thereof.

The electronic device adapted to execute the method for constructing the key-point learning model may further include an input device 503 and an output device 504. The processor 501, the memory 502, the input device 503 and the output device 504 may be interconnected through a bus or other means, and an example of a connection through a bus is shown in Fig. 5.

The input device 503 may receive input number or character information, and generate key signal input related to user settings and functional control of the electronic device adapted to execute the method for constructing the key-point learning model, such as a touch screen, a keypad, a mouse, a track pad, a touch pad, a pointer bar, one or more mouse buttons, a trackball or a joystick. The output device 504 may include a display device, an auxiliary lighting device (such as an LED) and a tactile feedback device (such as a vibration motor), etc. The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or the combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory or programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser, and through the graphical user interface or the web browser, the user may interact with the implementation of the systems and technologies described herein) or a computing system including any combination of such background component, middleware component or front-end component. The components of the system may be interconnected by any form or medium of digital data communication (such as a communication network). Examples of communication networks include a local area network (LAN), a wide area network (WAN) and the Internet.

The computer system may include a client and a server. The client and the server are generally remote from each other and interact through a communication network. The relationship between the client and the server is generated by computer programs running on the corresponding computer and having a client-server relationship with each other. The server may be a cloud server, also known as a cloud computing server or a cloud host, which is a host product in the cloud computing service system and may solve the defects of difficult management and weak service scalability existing among a conventional physical host and a VPS (virtual private server) service.

Different from the existing technology that requires a large amount of labeled data to construct a key-point learning model, the present disclosure provides a new solution for constructing the key-point learning model in a semi-supervised way through the above solutions. A generative adversarial training is first executed by using a small amount of the labeled data in a supervised way, and then combined with the preliminary result of the generative adversarial training, the unlabeled data is further used for training. This solution makes full use of a large amount of the unlabeled data. Due to the addition of the generative adversarial thought, the accuracy of the final constructed model is also relatively high, and the threshold and difficulty of constructing the key-point learning model are reduced.

It should be appreciated that the steps of reordering, adding or deleting may be executed using the various forms shown above. For example, the steps described in the present disclosure may be executed in parallel or sequentially or in a different order, so long as the desired results of the technical solutions disclosed in the present disclosure may be realized, and no limitation is imposed herein.

The above specific description is not intended to limit the scope of the present disclosure. It should be appreciated by those skilled in the art that various modifications, combinations, sub-combinations, and substitutions may be made depending on design requirements and other factors. Any modification, equivalent and modification made within the spirit and principles of the present disclosure shall be included within the scope of the present disclosure.

## Claims

1. A method for constructing a key-point learning model, the method comprising:
acquiring (201) labeled data labeling a human-body key-point and unlabeled data that does not label the human-body key-point;
training (202), using the labeled data, an initial prediction model and an initial discriminator in a supervised training way to obtain a first prediction model and a first discriminator;
training (203), using the unlabeled data, the first prediction model and the first discriminator in an unsupervised training way to obtain a second prediction model and a second discriminator; and
constructing (204) a key-point learning model according to the second prediction model and the second discriminator.

2. The method according to claim 1, wherein the training, using the labeled data, an initial prediction model and an initial discriminator in a supervised training way to obtain a first prediction model and a first discriminator, comprises:
predicting (302) a first predicted key-point value of the labeled data by using the initial prediction model;
modifying (303) a prediction parameter of the initial prediction model to obtain the first prediction model according to a difference between the first predicted key-point value and an actual key-point value of the labeled data; and
modifying (304) a discrimination parameter of the initial discriminator to obtain the first discriminator by using a discrimination accuracy of the initial discriminator on the first predicted key-point value and the first actual key-point value.

3. The method according to claim 1 or 2, wherein training, using the unlabeled data, the first prediction model and the first discriminator in an unsupervised training way to obtain a second prediction model and a second discriminator, comprises:
predicting (305) a second predicted key-point value of the unlabeled data by using the first prediction model; and
modifying (306) a prediction parameter of the first prediction model and a discrimination parameter of the first discriminator to obtain the second prediction model and the second discriminator by using a discrimination accuracy of the first discriminator on the second predicted key-point value and a corresponding actual key-point value.

4. The method according to any one of claims 1 to 3, wherein the initial discriminator is constructed based on three fully connected layers, a normalization layer, and a binary classifier, the three fully connected layers being connected in sequence.

5. The method according to any one of claims 1 to 4, the method further comprising:
predicting a key-point of new unlabeled data by using the key-point learning model.

6. The method according to any one of claims 1-5, the method further comprising:
labeling a pose of a human-body key-point output by the key-point learning model to obtain human-body pose data.

7. The method according to claim 6, the method further comprising:
synchronizing the human-body pose data to a corresponding human-body key-point of a virtual character created by a user in a virtual scenario.

8. An apparatus for constructing a key-point learning model, the apparatus comprising: units for performing the method according to any one of claims 1 to 7.

9. An electronic device, comprising:
at least one processor; and
a memory in communication with the at least one processor, wherein the memory stores instructions executable by the at least one processor, and the instructions, when executed by the at least one processor, cause the at least one processor to execute the method for constructing a key-point learning model according to any one of claims 1 to 7.

10. A non-transitory computer readable storage medium storing computer instructions, wherein the computer instructions cause a computer to execute the method for constructing the key-point learning model according to any one of claims 1 to 7.

11. A computer program comprising instructions which, when the program is executed by a computer, cause the computer to perform the method according to any one of claims 1 to 7.
